# EUROPEAN PATENT APPLICATION

(11) **EP 4 488 654 A1**
(43) Date of publication of application: **08.01.2025**
(21) Application number: 23760399.8
(22) Date of filing: 23.02.2023
(51) Int. Cl.: G01N 3/30, G01N 1/42

(54) **ULTRA-CRYOGENIC CHAMBER FOR IMPACT TESTING**

(30) Priority: 28.02.2022 KR 20220026127
(71) Applicant: Hyundai Steel Company, Incheon 22525 (KR)
(72) Inventor: YOU, Won Hyo, Incheon 22525 (KR); JUNG, Sang Bae, Incheon 22525 (KR); PARK, Jae Young, Incheon 22525 (KR); KIM, Jeong Kwan, Incheon 22525 (KR)
(74) Representative: Viering, Jentschura & Partner mbB Patent- und Rechtsanwälte
(86) International application number: PCT/KR2023/002607
(87) International publication number: WO 2023/163525

(57) **Abstract**

The present invention relates to a cryogenic chamber for impact testing, which comprises a rectangular container having a sidewall formed by at least two layers and an upper side opened, wherein the sidewall includes a first sidewall and a second sidewall shaped to surround the first sidewall, the first sidewall partitions a first space in which a specimen may be arranged, the second space partitions a second space to perform thermal insulation treatment between the first sidewall and the second sidewall, the second space has a structure in which the upper side is closed, and a first cooling medium is continuously supplied to the second space, thereby blocking heat transfer between the first space and the outside, while a second cooling medium is continuously supplied to the first space, thereby cooling the specimen.

## Description

### [Field of Invention]

The present invention relates to a cryogenic chamber for impact testing, and more particularly, to a cryogenic chamber capable of cooling a specimen for impact testing to a desired temperature within a short period of time using a cooling medium.

### [Background of Invention]

In general, a cryogenic chamber for impact testing includes a device under test (DUT), as well as a system for testing the same therein and operates these device and system in order to perform a high-speed test of the device under test (DUT).

Korean Patent Laid-Open Publication No. 10-2010-0000666 discloses a chamber for preparing an impact specimen. In the case of a conventional chamber, when a temperature of the test piece (that is, specimen) is lowered by cooling the specimen through vaporized liquid nitrogen and reaches a target temperature, impact testing is performed. However, with the conventional system, the cooling limit of the specimen is only -196 °C. The reason was determined to be somewhat difficult to lower the temperature of the specimen to the service temperature (liquid hydrogen environment 20K) due to significant heat loss from the inside of a low-temperature chamber and connection pipe.

Further, recently, a need to change the system to enable material evaluation under hydrogen tank material use environment (20K, -253 °C) is increasing. Therefore, it is necessary to manufacture a chamber so that impact testing can be performed in an ultra-low temperature environment through a change in chamber design.

On the other hand, conventionally, the use of a cooling medium is reduced by maintaining the chamber in a vacuum atmosphere. However, since manufacturing and maintenance costs are relatively high when manufacturing a vacuum chamber, there is a need for manufacturing a chamber enable cryogenic cooling of a specimen in an inexpensive method.

### [Summary of Invention]

### [Technical Problem to be Solved]

The present invention is to solve various problems including the above problems, and an object of the present invention is to provide a cryogenic chamber for impact testing that can effectively cool a specimen to a cryogenic temperature while the chamber manufacturing cost and maintenance cost is relatively low. However, these tasks are illustrative, and the scope of the present invention is not limited thereby.

### [Technical Solution]

According to one embodiment of the present invention, there is provided a cryogenic chamber for impact testing, which includes a rectangular container having a sidewall formed by at least two layers and an upper side opened, wherein the sidewall includes a first sidewall and a second sidewall shaped to surround the firs sidewall, the first sidewall partitions a first space in which a specimen may be arranged; the second sidewall partitions a second space to perform thermal insulation treatment between the first sidewall and the second sidewall; the second space has a structure in which the upper side is closed, and a first cooling medium is continuously supplied to the second space, thereby blocking heat transfer between the first space and the outside, while a second cooling medium is continuously supplied to the first space, thereby cooling the specimen.

The cryogenic chamber for the impact test may include a first cooling medium feed unit capable of supplying the first cooling medium to a part of the second sidewall.

The cryogenic chamber for impact testing may include a first cooling medium discharge unit configured to discharge the first cooling medium at a part of the second sidewall.

In the cryogenic chamber for impact testing, a diameter of the first cooling medium discharge unit may range from 3 to 10 mm.

In the cryogenic chamber for impact testing, in order to supply the second cooling medium to the first space, a second cooling medium feed unit may be formed on a part of the first sidewall while penetrating a part of the second sidewall.

In the cryogenic chamber for impact testing, a bottom surface of the container may be processed by knurling to facilitate attachment and detachment of the specimen.

In the cryogenic chamber for impact testing, the first cooling medium may include liquefied nitrogen (LN₂).

In the cryogenic chamber for impact testing, the second cooling medium may include liquefied helium (LHe).

In the cryogenic chamber for impact testing, in order to seal the first space, a cover for shielding may be formed on the top of the container.

In the cryogenic chamber for impact testing, the container may include SUS 316 material.

In the cryogenic chamber for impact testing, the first sidewall and the second sidewall, respectively, may have a thickness of 2 to 10 mm.

### [Effect of Invention]

According to one embodiment of the present invention completed as described above, it is possible to implement a cryogenic chamber for impact test that can effectively cool a test piece ('specimen') to a cryogenic temperature while the chamber manufacturing cost and maintenance cost are low. Of course, the scope of the present invention is not limited by these effects.

### [Brief Description of Drawings]

FIG. 1 is a perspective view schematically illustrating the structure of a cryogenic chamber for impact testing according to an embodiment of the present invention.
FIG. 2 is a perspective view schematically illustrating the structure of the container shown in FIG. 1.
FIG. 3 is a view showing a cut-portion of the container shown in FIG. 2.
FIG. 4 is a photograph of a cryogenic chamber for impact testing according to an experimental example of the present invention.
FIGS. 5 and 6 are graphs showing cooling test results of specimen samples for impact testing according to the experimental examples of the present invention.

### [Detailed Description of Preferred Embodiments of Invention]

Hereinafter, several preferred embodiments of the present invention will be described in detail with reference to the accompanying drawings.

The embodiments of the present invention are provided to more completely explain the present invention to those skilled in the art, and the following examples may be modified in many different forms, and the scope of the present invention is not limited to the examples. Rather, these embodiments are provided to allow this disclosure to be thorough and complete, and to fully deliver the spirit of the present invention to those skilled in the art. Hereinafter, embodiments of the present invention will be described with reference to drawings schematically illustrating ideal embodiments of the present invention.

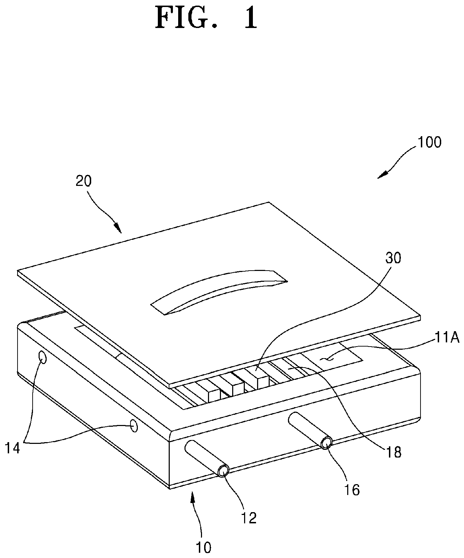

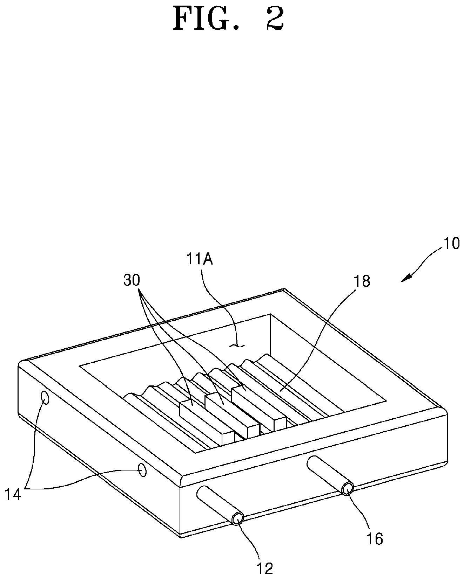

FIG. 1 is a perspective view schematically illustrating the structure of a cryogenic chamber for impact testing according to an embodiment of the present invention, and FIG. 2 is a perspective view schematically illustrating the structure of a container shown in FIG. 1.

Referring to FIG. 1, a cryogenic chamber 100 for impact testing according to an embodiment of the present invention may include a rectangular container 10 having at least two layers of side walls and an open top, and a cover 20 which covers an upper portion of the container 10 to shield the inside of the container 10 from the outside. The cover 20 may have a handle formed on a part of the cover 20 in order to facilitate operation of the cover 20. At this time, the shape of the handle may be manufactured in a form by which the operator can easily move the cover 20.

More particularly, the container 10 may be provided with a first cooling medium feed unit 12 capable of supplying a first cooling medium to the inside of the container 10 and a first cooling medium discharge unit 14 capable of discharging the first cooling medium to the outside.

The container 10 may further be provided with a second cooling medium feed unit 16 capable of supplying a second cooling medium to the inside of the container 10. Herein, since the vaporization of the second cooling medium is performed at a very high speed, it is not necessary to form a configuration in which the second cooling medium is separately discharge, instead, the second cooling medium may be only supplied to the inside of the container 10.

Referring to FIG. 2, a specimen 30 may be disposed in an empty space 11A formed inside the container 10. A predetermined pattern may be formed on the bottom surface 18 of the container so that the bottom of the container 10 and the specimen 30 do not adhere to each other due to vaporization. For example, the predetermined pattern may include a bottom surface of the container 10 processed by knurling. Further, even in the case of a bottom surface processed in a concavo-convex shape, the specimen 30 may be easily attached and detached. The predetermined pattern may be manufactured by various pattern processing methods other than knurling processing. In addition, since the cooling medium according to the embodiment of the present invention is circulated from the bottom to the top, the bottom surface of the container 10 does not need to be separately insulated.

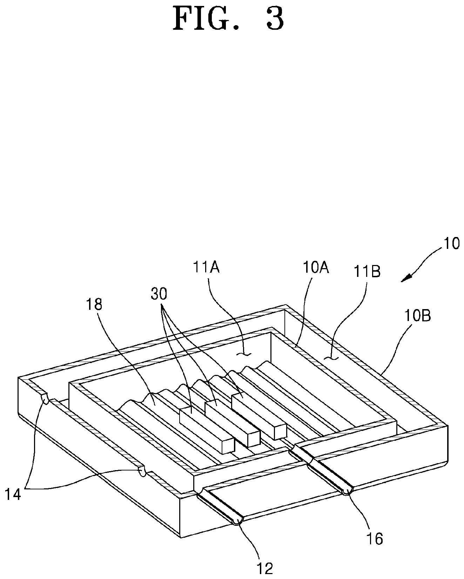

FIG. 3 is a view showing a cut-portion of the container shown in FIG. 2.

Referring to FIG. 3, in which a sidewall of the container 10 is cut along the first cooling medium feed unit 12, the first cooling medium discharge unit 14, and the second cooling medium feed unit 16 in the direction from the bottom to the top of the container 10 shown in FIG 2, the container 10 may include at least two layers of sidewalls. The container 10 may include, for example, SUS 316 material. In addition to the SUS 316 material, any material may also be used as long as it can prevent distortion or shrinkage of the chamber due to the cooling medium.

For example, the sidewall may include a first sidewall 10A and a second sidewall 10B formed in a shape surrounding the first sidewall 10A. The first sidewall 10A may divide or partition a first space 11A so that the specimen 30 can be disposed. The second sidewall 10B may partition a second space 11B so that heat insulation can be performed between the first sidewall 10A and the second sidewall 10B. At this time, as shown in FIG. 2, the second space 11B has a closed upper structure.

A thickness of the first sidewall 10A and the second sidewall 10B may range from 2 to 10 mm. If the thicknesses of the first sidewall 10A and the second sidewall 10B are out of the above ranges, heat loss may occur, resulting in a considerable decrease in the cooling efficiency of the chamber.

For example, when the thicknesses of the first sidewall 10A and the second sidewall 10B are less than 2 mm, dew condensation occurs by the first cooling medium at a corner portion of the first space 11A due to the influence of the first cooling medium, hence reducing the cooling efficiency of the first space 11A. On the other hand, when the thickness of the first sidewall 10A and the second sidewall 10B exceeds 10 mm, a problem of deteriorating insulation effects by the first cooling medium may occur, which in turn causes a problem of not controlling the cooling of a specimen by the second cooling medium to desired temperature. Accordingly, the thickness of the first sidewall 10A and the second sidewall 10B may range from 2 to 10 mm, preferably 3 to 6 mm, and more preferably 3 to 4 mm.

By continuously supplying the first cooling medium to the second space 11B, heat transfer between the first space 11A and the outside may be blocked. The first cooling medium may include, for example, liquefied nitrogen (LN₂).

In order to continuously supply the first cooling medium at a constant flow rate to the second space 11B, a first cooling medium feed unit 12 may be provided on a part of the second sidewall 10B. Further, a first cooling medium discharge unit 14 may be provided on a part of the second side wall 10B so that the first cooling medium can be discharged from the second space 11B to the outside.

The first cooling medium feed unit 12 and the first cooling medium discharge unit 14 are formed on a part of the second sidewall 10B, wherein it may be provided on the same level line. At this time, only one first cooling medium feed unit 12 is disposed, while at least two or more first cooling medium discharge unit 14 may be disposed to properly discharge the medium according to the flow rate of the first cooling medium in order to maintain a stage (or stepped level) inside the container 10. An artificial discharge device such as a vacuum pump is not provided on a part of the first cooling medium discharge unit 14.

Since vaporization easily occurs in the first cooling medium, the risk of explosion of the container 10 may increase if the amount is large compared to an allowable amount used for insulation. In order to solve this problem, the container 10 may be stably controlled by discharging a portion of the first cooling medium to the outside of the container 10.

Herein, a diameter of the first cooling medium discharge unit 14 may range from 3 to 10 mm. When the diameter of the first cooling medium discharge unit 14 is less than 3 mm, it is difficult to smoothly discharge the first cooling medium to the outside. On the other hand, when the diameter of the first cooling medium discharge unit 14 exceeds 10 mm, the amount of the first cooling medium discharged to the outside of the container 10 may increase, resulting in heat loss. Thus, there arises a problem that heat insulation of the first space 11A may not be properly controlled. Therefore, the diameter of the first cooling medium discharge unit 14 should be adjusted to 3 to 10 mm, preferably 3 to 5 m, more preferably 4 to 5 mm.

Meanwhile, the second cooling medium may be continuously supplied to the first space 11A to cool the specimen 30. The second cooling medium may include, for example, liquefied helium (LHe). In order to supply the second cooling medium to the first space 11A, a second cooling medium feed unit 16 formed on a part of the first sidewall 10A while penetrating a part of the second sidewall 10B may be provided.

When liquefied helium is used as the second cooling medium, it is impossible to cool in an immersion form under an ultra-low temperature environment of 20K (-253 °C) because of its very high vaporization rate. Therefore, it can be controlled by adopting a gas cooling method and directly contacting the gas to the specimen 30. To this end, the second cooling medium feed unit 16 should be mounted close to the area where the specimen 30 is disposed.

Hereinafter, the configuration and operation of the present invention will be described in more detail through preferred embodiments of the present invention. However, this is presented as a preferred example of the present invention and cannot be construed as limiting the present invention by this in any sense.

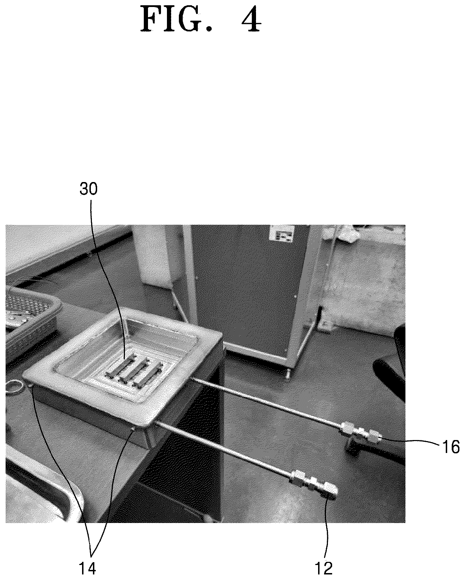

As an experimental sample of the present invention, a steel specimen for impact test containing the composition summarized in Table 1 below was manufactured in a size of 10 mm × 10 mm × 55 mm, and then it was placed in a space provided in the cryogenic chamber for impact test shown in FIG. 4. Thereafter, the temperature of the chamber was cooled down to -196 °C by injecting liquefied nitrogen into an empty space in the form of a square tube for insulation provided on an outer wall of the chamber in a normal pressure atmosphere. At this time, the temperature inside the chamber and the temperature of the sample were continuously monitored using a thermocouple connected by spot welding.

After the temperature inside the chamber was cooled to -196 °C and maintained for a certain period of time, liquefied helium was fed to the space where the specimen was placed and sprayed directly onto the specimen. Liquefied helium was fed at 3 bar or less. At this time, liquid nitrogen was continuously supplied to insulate the inside of the chamber. After the temperature of the chamber was cooled to -253 °C, the specimen was cooled to an ultra-low temperature while maintaining for about 30 minutes, followed by executing the impact test.

**[TABLE 1]**

| composition (wt.%) | C | Si | Mn | P | S | Ni |
|---|---|---|---|---|---|---|
| specimen | 0.1 or less | 0.1 - 0.35 | 0.3 - 0.9 | 0.025 or less | 0.025 or less | 8.5-10 or less |

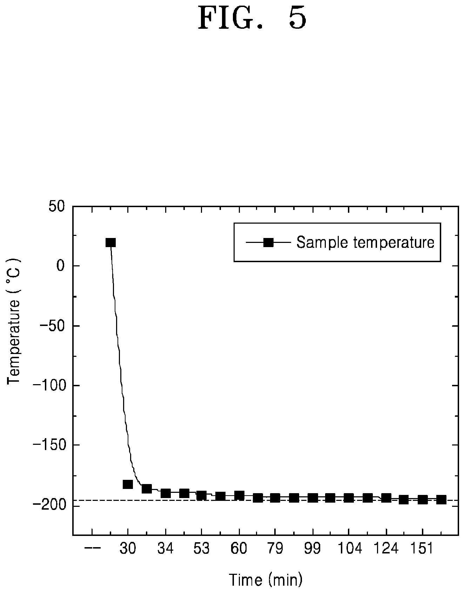

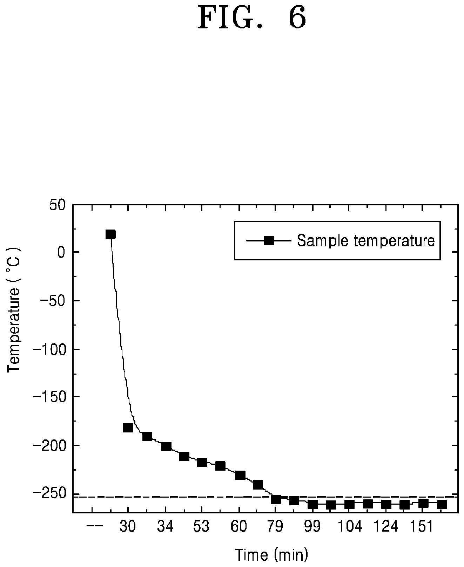

FIGS. 5 and 6 are graphs showing the cooling test results of specimen samples for impact testing according to the experimental examples of the present invention.

First, referring to FIG. 5, when the temperature inside the chamber is cooled to - 196 °C by first introducing liquid nitrogen into the cryogenic chamber for impact test, it could be confirmed that the temperature of the specimen sample is maintained at around - 196 °C after 30 minutes.

Referring to FIG. 6, when the temperature inside the chamber is cooled to - 253 °C, which is an ultra-low temperature state, by secondly introducing liquefied helium while maintaining heat insulation to the outside of the chamber with continuous introduction of liquefied nitrogen, it could be confirmed that the temperature of the specimen sample is maintained at around -253 °C after about 80 minutes.

As described above, although the demand for cryogenic environmental materials increases with the expansion of the natural energy business field, there has been no development of a chamber capable of producing a specimen capable of impact testing at a temperature of 20K or less.

According to one embodiment of the present invention, liquefied helium is directly injected into the chamber to cool the specimen and, in order to suppress the temperature of the chamber from rising during a holding time required during the cryogenic test, liquid nitrogen is supplied continuously to the outer wall of the chamber to insulate the chamber, whereby a drop in temperature inside the specimen could be maximized even in a normal pressure atmosphere.

Although the present invention has been described with reference to the embodiments shown in the drawings, this is merely exemplary, and those skilled in the art will understand that various modifications and equivalent other embodiments are possible therefrom. Therefore, the true technical protection scope of the present invention should be determined by the technical spirit of the appended claims.

## Claims

1. A cryogenic chamber for impact testing, comprising a rectangular container having a sidewall formed by at least two layers and an upper side opened,
wherein the sidewall includes a first sidewall and a second sidewall shaped to surround the firs sidewall;
the first sidewall partitions a first space in which a specimen can be arranged; and the second sidewall partitions a second space to perform thermal insulation treatment between the first sidewall and the second sidewall, wherein the second space has a structure in which the upper side is closed,
a first cooling medium is continuously supplied to the second space, thereby blocking heat transfer between the first space and the outside, and
a second cooling medium is continuously supplied to the first space, thereby cooling the specimen.

2. The cryogenic chamber according to claim 1, further comprising a first cooling medium feed unit capable of supplying the first cooling medium on a part of the second sidewall.

3. The cryogenic chamber according to claim 1, further comprising a first cooling medium discharge unit capable of discharging the first cooling medium on a part of the second sidewall.

4. The cryogenic chamber according to claim 3, wherein the first cooling medium discharge unit has a diameter of 3 to 10 mm.

5. The cryogenic chamber according to claim 1, further comprising: in order to supply the second cooling medium to the first space, a second cooling medium feed unit formed on a part of the first sidewall while penetrating a part of the second sidewall.

6. The cryogenic chamber according to claim 1, wherein a bottom surface of the container is processed by knurling to facilitate attachment and detachment of the specimen.

7. The cryogenic chamber according to claim 1, wherein the first cooling medium includes liquefied nitrogen (LN₂).

8. The cryogenic chamber according to claim 1, wherein the second cooling medium includes liquefied helium (LHe).

9. The cryogenic chamber according to claim 1, wherein, in order to seal the first space, a shielding cover is formed on top of the container.

10. The cryogenic chamber according to claim 1, wherein the container includes SUS 316 material.

11. The cryogenic chamber according to claim 1, wherein the first sidewall and the second sidewall, respectively, have a thickness of 2 to 10 mm
